# EUROPEAN PATENT APPLICATION

(11) **EP 4 496 143 A1**
(43) Date of publication of application: **22.01.2025**
(21) Application number: 23769750.3
(22) Date of filing: 14.03.2023
(51) Int. Cl.: H01R 31/06, H01R 13/03, H01R 4/62, H01B 7/17, H01B 7/00, H01B 1/02, B60L 53/16, B60L 53/18

(54) **CONNECTOR ASSEMBLY AND VEHICLE**

(30) Priority: 14.03.2022 CN 202210250061
(71) Applicant: Jilin Zhong Ying High Technology Co., Ltd., Jilin 130028 (CN)
(72) Inventor: WANG, Chao, Changchun, Jilin 130028 (CN)
(74) Representative: Boult Wade Tennant LLP
(86) International application number: PCT/CN2023/081262
(87) International publication number: WO 2023/174248

(57) **Abstract**

The disclosure discloses a connector assembly and a vehicle, including at least two electrical connection skeletons and a connector arranged at both ends of the electrical connection skeleton, wherein the connector includes a connection terminal, material of the connection terminal is copper or copper alloy, material of the electrical connection skeleton contains pure aluminum or aluminum alloy with an aluminum content of more than 90%, and the electrical connection skeleton is electrically connected to the connection terminal through a spacer mental layer. The electric connection skeleton made of aluminum or aluminum alloy has very high electrical conductivity and is fully competent for the transmission of large current of the electric vehicle. The spacer mental layer is used to isolate the copper terminal from the electrical connection skeleton, to slow down electrochemical corrosion between the copper terminal and the electrical connection skeleton, and increase the service life of the connector assembly. The electrical connection skeleton is provided by stranding, which can offset each other's electromagnetic interference and reduce the use of a shielding layer of the electrical connection skeleton.

## Description

The present disclosure claims priority of the Chinese patent application with the application number 2022102500618, filed on March 14, 2022, and entitled "CONNECTOR ASSEMBLY AND VEHICLE", the entire contents of which are incorporated herein by reference.

### TECHNICAL FIELD

The disclosure relates to the technical field of vehicle electrical appliances, and more particularly to a connector assembly and a vehicle.

### BACKGROUND

An electric vehicle is a vehicle which is powered by a vehicle-mounted power supply and of which wheels are driven by a motor to drive, and which has been widely accepted and marketed for its environmental protection and energy saving. With the development of science and technology, especially the development of new high-energy battery technology, the driving range of the electric vehicle is greatly improved, the charging time is greatly shortened, and the electric vehicle has entered a new stage of development, and began to step into the practical stage. The substantial reduction in charging time is accompanied by the popularity of high-power charging of the vehicle, the diameter of a high-voltage cable used for high-power charging of the vehicle is getting larger and larger, high-voltage wiring harness is mainly used in the new energy electric vehicle industry and its related product fields. In the existing high-voltage wiring harness, the connecting cables and terminals between the connector and the charging socket are of copper structure or multi-core aluminum wire structure, among them, the material of pure copper or copper alloy has a high price and a high density, which may cause high cost and heavy weight of the overall high-voltage wiring harness, and the multi-core wire structure has poor cable rigidity and low conductivity, and therefore, there is an urgent need in the technical field of vehicle electrical appliances of a new solution to solve the above problems.

### SUMMARY

An object of the disclosure is to provide a connector assembly that is competent for transmission of large current of an electric vehicle and uses an electrical connection skeleton, to slow down electrochemical corrosion between a copper terminal and the electrical connection skeleton in the connector, increase the service life of the connector and reduce the cost of the connector. The electrical connection skeleton is provided by stranding, which can offset each other's electromagnetic interference and reduce the use of a shielding layer of the electrical connection skeleton.

According to the first aspect of the disclosure, a connector assembly is provided, which includes at least one electrical connection skeleton and a connector arranged at both ends of the electrical connection skeleton, wherein the connector includes a connection terminal, material of the connection terminal is copper or copper alloy, material of the electrical connection skeleton contains pure aluminum or aluminum alloy with an aluminum content of more than 90%, and the electrical connection skeleton is electrically connected to the connection terminal through a spacer mental layer.

The present disclosure further provides a vehicle including a connector assembly as described above.

The advantageous effects of the present disclosure are as follows.
1. The electric connection skeleton made of aluminum or aluminum alloy has very high electrical conductivity and is fully competent for the transmission of large current of the electric vehicle.
2. The spacer mental layer is used to isolate the copper terminal from the electrical connection skeleton, to slow down electrochemical corrosion between the copper terminal and the electrical connection skeleton, and increase the service life of the connector.
3. The electrical connection skeleton is provided by stranding, which can offset each other's electromagnetic interference and reduce the use of a shielding layer of the electrical connection skeleton.

Other features and advantages of the present disclosure will become clear from the following detailed description of exemplary embodiments of the present disclosure with reference to the accompanying drawings.

### BRIEF DESCRIPTION OF THE DRAWINGS

The accompanying drawings incorporated in and forming part of the specification show embodiments of the present disclosure and, together with description thereof, are used to explain the principle of the present disclosure.
FIG. 1 is a structural schematic of a connector assembly of the disclosure.
FIG. 2 is a cross-sectional view of an electrical connection skeleton of a connector assembly of the disclosure.
FIG. 3 is a cross-sectional view of an embodiment of another electrical connection skeleton of a connector assembly of the disclosure.
FIG. 4 is a structural schematic of parallel arrangement of an electrical connection skeleton of a connector assembly of the disclosure.
FIG. 5 is a structural schematic of intertwining arrangement of an electrical connection skeleton of a connector assembly of the disclosure.

The reference numerals in the drawings are as below:
1-connector, 2-electrical connection skeleton, 21-guide core, 22-insulation layer, 23-shielding layer, 24-outer insulation layer.

### DETAILED DESCRIPTION

Various exemplary embodiments of the disclosure will now be described in detail with reference to the accompanying drawings. It should be noted that, unless otherwise specified, the relative arrangements, numerical expressions, and numerical values of parts and steps set forth in these embodiments do not limit the scope of the present disclosure.

The following description of at least one exemplary embodiment is in fact illustrative only and in no way constitutes any limitation to the present disclosure, and its application or use.

Technologies, methods and apparatuses known to those ordinarily skilled in the art may not be discussed in detail, but where appropriate, said technologies, methods and apparatuses shall be considered as part of the specification.

In all the examples shown and discussed here, any specific value should be interpreted as merely exemplary and does not serve as limitation. Therefore, other examples of the exemplary embodiments may have different values.

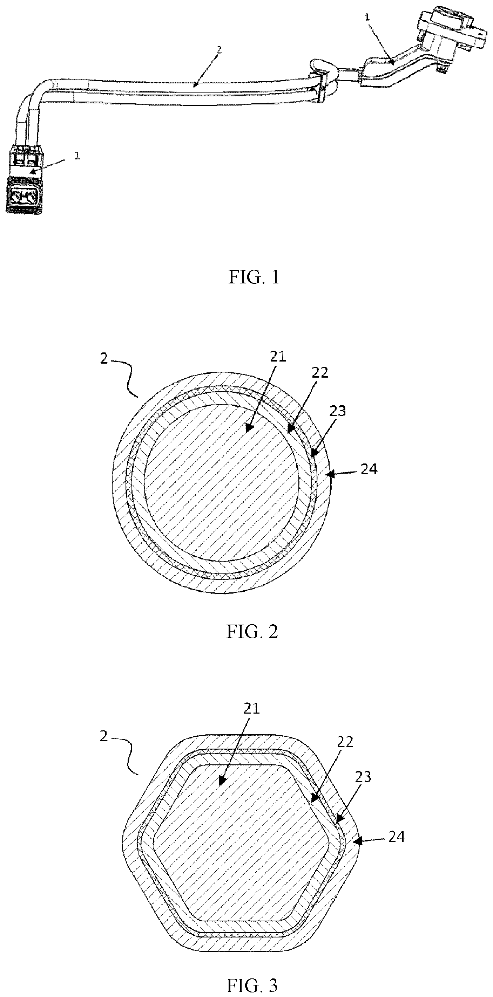

A connector assembly, as shown in FIGs. 1 to 5, includes at least two electrical connection skeletons 2 and a connector 1 arranged at both ends of the electrical connection skeleton 2, wherein the connector 1 includes a connection terminal, material of the connection terminal is copper or copper alloy, material of the electrical connection skeleton contains pure aluminum or aluminum alloy with an aluminum content of more than 90%, and the electrical connection skeleton 2 is electrically connected to the connection terminal through a spacer mental layer. On an electric vehicle, it is difficult for the traditional copper wire to meet the charging requirements because of its heavy weight and high price, at the same time, the multi-core aluminum wire has not high conductivity, while the electrical connection skeleton 2 has a high conductive efficiency and is suitable for use in the high-voltage transmission of the electric vehicle. One end of the electrical connection skeleton 2 is connected to one connector 1, and the other end thereof is connected to a vehicle-mounted battery by another connector 1 for charging. The connector 1 using the electrical connection skeleton 2 has the advantages of high conductivity and light weight and the like. Because the larger the electric potential difference between metals is, the more serious the electrochemical corrosion is, and the electric potential difference between the copper terminal and the electrical connection skeleton 2 is very large, electrical corrosion may quickly occur, which reduces the service life of the copper terminal and the electrical connection skeleton 2. The electric potential is increased between the copper terminal and the electrical connection skeleton 2, and the metal between copper and aluminum acts as a spacer mental layer, so as to be able to mitigate electrical corrosion and thus extend the service life of the joint. It should be noted that the spacer mental layer contains at least a copper elemental substance, an aluminum elemental substance, a copper-aluminum solid solution and a copper-aluminum compound. The copper-aluminum compound is one or more of Cu₂Al, Cu₃Al₂, CuAl, CuAl₂.

In some embodiments, the material of the spacer mental layer is gold or silver or a metal with an electric potential between that of copper and aluminum. Because of good electrical conductivity and stable chemical properties of gold and silver among these metals, gold and silver are very suitable as spacer mental layers. When the metal with the electric potential between that of copper and aluminum is used as the spacer mental layer, the electron transfer speed between copper and aluminum can be reduced, the voltage of the battery formed by combination of copper and aluminum can be reduced, and the speed of electrical corrosion can be slowed down, and the users can select different materials as the spacing layer between the copper terminal and the aluminum wire according to actual needs.

In some embodiments, at least part of the electrical connection skeleton 2 is a flexible body. The flexible body can ensure that the electrical connection skeleton 2 can be bent by a large angle, to be conveniently disposed in the vehicle body with a large corner. In addition, when the vehicle is driving, the electrical connection skeleton 2 may shake repeatedly along with the vehicle, and the flexible body can absorb the shock force, play the effect of shock absorption, and prevent the electrical connection skeleton 2 from being too rigid and fatigue occurring.

In some embodiments, the electrical connection skeleton 2 includes at least one bending portion, to meet the needs of installation in the vehicle body.

In some embodiments, the electrical connection skeleton has a cross section in the shape of one or several of circular, oval, rectangular, polygonal, A-shaped, B-shaped, D-shaped, M-shaped, N-shaped, O-shaped, S-shaped, E-shaped, F-shaped, H-shaped, K-shaped, L-shaped, P-shaped, T-shaped, U-shaped, V-shaped, W-shaped, X-shaped, Y-shaped, Z-shaped, semi-arc, arc, and waved shape. Electrical connection skeletons 2 of different cross-section shapes can be selected according to the actual situation.

In some embodiments, the cross section of the electrical connection skeleton 2 is of a polygon, and corners of the polygon are chamfered or rounded, When the cross section of the electrical connection skeleton 2 has edges and corners, the edges and corners can be rounded or chamfered to prevent the sharp portions thereof from causing damage to the insulation layer 22 and the shielding layer 23.

In some embodiments, the electrical connection skeleton 2 is a rigid body and the tensile strength of the electrical connection skeleton 2 is greater than 75 MPa. The rigid body refers to an object whose shape and size do not change in motion and after the force is applied thereto, and the relative position of the internal points does not change. Absolutely rigid body does not actually exist, but is only an ideal model, because any object is more or less deformed after the force is applied thereto, and if the degree of deformation is extremely small relative to the geometric size of the object itself, and the deformation can be ignored when studying the movement of the object. Therefore, in the process of use of the electrical connection skeleton 2 made of rigid body material, the deformation generated is negligible and can be ignored, and the greater the tensile strength of the rigid body is, the less the deformation is.

In order to verify the influence on the torque at the time of bending of the electrical connection skeleton 2 and whether abnormal sound occurs in the vibration process, caused by the tensile strength of the electric connection skeleton 2, the inventor selects a sample of the electrical connection skeleton 2 with the same size specification and using different tensile strengths to test the torque at the time of bending of the electrical connection skeleton 2 and the abnormal sound in the vibration process.

The tensile value of the electrical connection skeleton 2 is tested by using a universal tension testing machine to fix the two ends of the electrical connection skeleton 2 on a tensile fixture of the universal tension testing machine, and to stretch the sample at a speed of 50 mm/min and record the tensile value at the time of being pulled broken. In this embodiment, the tensile value greater than 1600 N is a qualified value.

The torque of the electrical connection skeleton 2 is tested by using a torque tester to test the torque value by which the electrical connection skeleton 2 is deformed during bending when the electrical connection skeleton 2 is bent at 90° at the same radius and at the same speed, and in this embodiment, a torque value less than 60 N•m is a preferred value.

Whether the electrical connection skeleton 2 produces abnormal sound is tested by selecting a sample of the electrical connection skeleton 2 with the same size specification and using different tensile strengths, assembling the connectors of the same specification together and fixing them on a vibration test bench, and observing whether the electrical connection skeleton 2 produces abnormal sound in the vibration test process.

**Table 1: Influence of different tensile strengths on the torque value and abnormal sound of the electrical connection skeleton 2**

| | Different tensile strengths (MPa) | | | | | | | | | | |
|---|---|---|---|---|---|---|---|---|---|---|---|
| 60 | 70 | 75 | 85 | 120 | 1200 | 280 | 330 | 380 | 1430 | 480 | 500 |

| The tension value (N) when the electrical connection skeleton 2 is pulled broken | | | | | | | | | | | |
|---|---|---|---|---|---|---|---|---|---|---|---|
| 1522 | 11580 | 1688 | 11709 | 1759 | 1815 | 11856 | 1909 | 1950 | 1989 | 2040 | 2067 |

| Torque value at which bending is performed in a horizontal direction (N•m) | | | | | | | | | | | |
|---|---|---|---|---|---|---|---|---|---|---|---|
| 6 | 8 | 9 | 18 | 27 | 34 | 44 | 46 | 49 | 52 | 159 | 70 |

| Whether the electrical connection skeleton 2 produces abnormal sound | | | | | | | | | | | |
|---|---|---|---|---|---|---|---|---|---|---|---|
| YES | YES | NO | NO | NO | NO | NO | NO | NO | NO | NO | NO |

As can be seen from Table 1 above, when the tensile strength of the electrical connection skeleton 2 is less than 75 MPa, the tensile value of the electrical connection skeleton 2 when it is pulled broken is less than 1600 N. At this time, the strength of the electrical connection skeleton 2 itself is not high, and the electrical connection skeleton 2 is pulled broken when subjected to a small external force, resulting in function failure of the electrical connection skeleton 1, and thus the purpose of electric energy transmission cannot be achieved. On the other hand, because the larger the tensile strength of the electrical connection skeleton 2 is, the less easily the electrical connection skeleton 2 deforms, so in the vibration test process, the less easily the electrical connection skeleton 2 produces abnormal sound relative to vibration of the connectors 1 connected at both ends. On the contrary, the smaller the tensile strength of the electrical connection skeleton 2 is, the more easily the electrical connection skeleton 2 deforms, so in the vibration test process, the more easily the electrical connection skeleton 2 produces abnormal sound relative to vibration of the connectors 1 connected at both ends. As can be seen from Table 1 above, when the tensile strength of the electrical connection skeleton 2 is less than or equal to 75 MPa, the electrical connection skeleton 2 may produce abnormal sound during the vibration test. Therefore, the inventor prefers that the tensile strength of the electrical connection skeleton 2 is greater than 75 MPa. Meanwhile, when the tensile strength of the electrical connection skeleton 2 is greater than 480 MPa, the torque value when the electrical connection skeleton 2 is bent at 90° is greater than 60 N•m, at this time the electrical connection skeleton 2 is not easily bent. Therefore, the inventor prefers that the tensile strength of the electrical connection skeleton 2 is greater than 75 MPa and less than or equal to 480 MPa.

In some embodiments, the electrical connection skeleton 2 has a cross-sectional area of 3.5 mm² to 240 mm². The cross-sectional area of the electrical connection skeleton 2 determines the current that the electrical connection skeleton 2 can conduct. Under normal circumstances, the electrical connection skeleton 2 that achieves signal conduction has a small current and a small cross-sectional area. For example, the smallest cross-sectional area of the electrical connection skeleton 2 for transmitting signals can reach 3.5 mm², and the electrical connection skeleton 2 that achieves power conduction has a high current and a large cross-sectional area. For example, for vehicle battery harness, the electrical connection skeleton 2 has a largest cross-sectional area of 240 mm².

In some embodiments, the spacer mental layer contains at least 37 wt% of copper-aluminum solid solution. When the spacer mental layer contains less than 37wt% of copper-aluminum solid solution, other components in the spacer mental layer occupies 63 wt% or larger. The copper elemental substance and the copper elemental substance take a large proportion in the spacer mental layer, which means that copper and aluminum are not welded sufficiently, and the copper and aluminum elemental substances are not fused into copper-aluminum solid solution. The copper-aluminum compound takes a large proportion in the spacer mental layer, and the copper-aluminum compound has very poor conductivity and is highly brittle, and the mechanical and electrical properties of the copper-aluminum composite substrate may be reduced when the content of the copper-aluminum compound is high. In order to find the appropriate weight percentage of copper-aluminum solid solution contained in the spacer mental layer, the inventor carries out relevant tests, and carries out drawing force test and voltage drop test on the spacer mental layer with different weight percentages of copper-aluminum solid solution. If the drawing force of the electrical connection skeleton 2 is less than 3000 N, it is considered unqualified, and if the voltage drop of the electrical connection skeleton 2 is greater than 0.5 mV, it is also considered unqualified, and the results are shown in Table 2.

**Table 2: Effect of the weight percentage of copper-aluminum solid solution contained in the spacer mental layer on the drawing force and voltage drop of the electrical connection skeleton**

| The weight percentage of copper-aluminum solid solution contained in the spacer mental layer (wt%) | | | | | | | | | |
|---|---|---|---|---|---|---|---|---|---|
| 35 | 37 | 40 | 45 | 50 | 60 | 70 | 80 | 85 | 90 |

| Drawing force of the electrical connection skeleton 2 (N) | | | | | | | | | |
|---|---|---|---|---|---|---|---|---|---|
| 2956 | 3090 | 3232 | 3563 | 3786 | 4009 | 4125 | 4218 | 4430 | 4569 |

| Voltage drop of the electrical connection skeleton 2 (mV) | | | | | | | | | |
|---|---|---|---|---|---|---|---|---|---|
| 0.51 | 0.49 | 0.46 | 0.42 | 0.38 | 0.35 | 0.28 | 0.24 | 0.19 | 0.15 |

As can be seen from Table 2, when the copper-aluminum solid solution contained in the spacer mental layer is less than 37 wt%, the drawing force of the electrical connection skeleton 2 is less than 3000 N, which is considered unqualified. At the same time, the voltage drop of the electrical connection skeleton 2 is greater than 0.5 mV, which cannot meet the requirements of mechanical and electrical properties of the electrical connection skeleton 2. As the proportion of copper-aluminum solid solution contained in the spacer mental layer gradually increases, the mechanical and electrical properties of the electrical connection skeleton 2 gradually enhance, so that the spacer mental layer contains not less than 37 wt% of copper-aluminum solid solution. At the same time, because the electrical connection skeleton 2 is applied in automobiles and other equipment, the electrical connection skeleton 2 and the connection terminal vibrate together, resulting in relative motion between the electrical connection skeleton 2 and the connection terminal, and repeated friction may occur at the connection part, resulting in fretting corrosion. By setting the electrical connection skeleton 2 containing copper-aluminum solid solution and the connection terminal, fretting corrosion can be avoided, so as to prolong the service life of the electrical connection skeleton 2 and the connection terminal.

Only when the spacer mental layer contains a sufficient percentage of copper-aluminum solid solution, its resistance to fretting corrosion can be high enough. In order to find the appropriate proportion of copper-aluminum solid solution, the inventor conducts relevant tests. The test method is to select the same electrical connection skeleton 2 and connection terminal to be screwed and form a sample together with the spacer mental layer with different copper-aluminum solid solution contents. The conductivity of the sample is greater than 99.5 %. The sample is tested by shaking. During shaking, the mass of the spacer mental layer may be reduced due to generation of fretting corrosion. If the mass loss of the sample is greater than or equal to 0.01% after one hour of shaking, it is considered as unqualified; if the conductivity is reduced to 99.5 % or below, it is also considered as unqualified, and the results are as shown in Table 3.

**Table 3: Effect of the weight percentage of copper-aluminum solid solution contained in the spacer mental layer on mass loss and conductivity**

| The weight percentage of copper-aluminum solid solution contained in the spacer mental layer (wt%) | | | | | | | | | |
|---|---|---|---|---|---|---|---|---|---|
| 33 | 34 | 35 | 36 | 37 | 38 | 39 | 40 | 41 | 42 |

| Percentage of mass lost by the sample (%) | | | | | | | | | |
|---|---|---|---|---|---|---|---|---|---|
| 0.011 | 0.011 | 0.01 | 0.01 | 0.009 | 0.008 | 0.008 | 0.007 | 0.007 | 0.006 |

| Electric conductivity (%) | | | | | | | | | |
|---|---|---|---|---|---|---|---|---|---|
| 99.4 | 99.4 | 99.5 | 99.5 | 99.6 | 99.6 | 99.6 | 99.7 | 99.7 | 99.7 |

As can be seen from Table 3, when the weight percentage of the copper-aluminum solid solution contained in the spacer mental layer is less than 37 %, the mass loss ratio of the sample after vibration test is greater than or equal to 0.01 %, which is considered unqualified. Meanwhile, the conductivity of the sample is less than or equal to 99.5 %, which is also considered unqualified. Therefore, the inventor prefers, by combining with Table 2, that the copper-aluminum solid solution content in the spacer mental layer is not less than 37 wt%.

Further, the copper-aluminum solid solution contains copper-aluminum compound, the content of copper-aluminum compound is less than 15 wt%. The copper-aluminum solid solution also contains copper-aluminum compound. In order to avoid the excessive proportion of copper-aluminum compound in the copper-aluminum solid solution and which thus reduces the electrical performance of the copper-aluminum solid solution, the inventor carries out relevant tests and conducts voltage drop tests on the copper-aluminum solid solution with different weight percentages of copper-aluminum compound. If the voltage drop of the copper-aluminum solid solution is greater than 0.5 mV, it is considered unqualified, and the results are shown in Table 4.

**Table 4: Effect of different weight percentages of the copper-aluminum compound on the voltage drop of the copper-aluminum solid solution**

| Weight percentage of the copper-aluminum compound in the copper-aluminum solid solution (wt%) | | | | | | | | | |
|---|---|---|---|---|---|---|---|---|---|
| 14 | 15 | 17 | 20 | 24 | 28 | 33 | 40 | 45 | 50 |

| Voltage drop of the copper-aluminum solid solution (mV) | | | | | | | | | |
|---|---|---|---|---|---|---|---|---|---|
| 0.45 | 0.48 | 0.51 | 0.53 | 0.57 | 0.60 | 0.62 | 0.65 | 0.68 | 0.70 |

As can be seen from Table 4, when the weight percentage of the copper-aluminum compound in the copper-aluminum solid solution is greater than 15 wt%, the voltage drop of the copper-aluminum solid solution is greater than 0.5 mV, which cannot meet the electrical performance requirements. Therefore, the inventor prefers the content of the copper-aluminum compound in the copper-aluminum solid solution to be less than 15 wt%.

At the same time, when the electrical connection skeleton 2 and the connection terminal are welded, the connection strength of the welding is very important, and the spacer mental layer can increase the connection strength of the electrical connection skeleton 2 and the connection terminal, while the spacer mental layer made of copper-aluminum solid solution in which the content of the copper-aluminum compound is less than a certain amount can provide a connection effect of higher strength. In order to find a copper-aluminum solid solution with a suitable ratio of copper-aluminum compound, the inventor conducts relevant tests by welding the electrical connection skeleton 2 and the connection terminal using different spacer mental layers, and each spacer mental layer is a copper-aluminum solid solution with different contents of copper-aluminum compound. The drawing force of the welded sample is tested, and if the pulling force value when the sample is pulled broken is less than 1800 N, it is considered unqualified, and the test results are shown in Table 5.

**Table 5: Effect of different weight percentages of the copper-aluminum compound on the drawing force of the spacer mental layer made of the copper-aluminum solid solution**

| Weight percentages of the copper-aluminum compound (%) | | | | | | | | | | | |
|---|---|---|---|---|---|---|---|---|---|---|---|
| 20 | 19 | 18 | 17 | 16 | 15 | 14 | 13 | 12 | 11 | 10 | 9 |

| Pulling force value when the sample is pulled broken (N) | | | | | | | | | | | |
|---|---|---|---|---|---|---|---|---|---|---|---|
| 1532 | 1580 | 1688 | 1715 | 1759 | 1798 | 1846 | 1931 | 1956 | 1983 | 2046 | 2069 |

It can be seen from Table 5 that when the weight percentage of the copper-aluminum compound is greater than or equal to 15, the pulling force value when the sample is pulled broken is less than 1800 N, which is considered as unqualified. Therefore, the inventor prefers, by combining Table 3 and Table 4, that the content of the copper-aluminum compound in the copper-aluminum solid solution is less than 15 wt%.

In some embodiments, the material of the spacer mental layer contains nickel, cadmium, zirconium, chromium, cobalt, manganese, aluminum, tin, titanium, zinc, copper, silver, gold, phosphorus, tellurium, beryllium or lead. The spacer mental layer is made by the above metals of which the electric potential is between that of copper and aluminum, so that the chemical property of the spacer mental layer formed is relatively stable. More preferably, the material of the spacer mental layer is at least one of aluminum, nickel and zinc, which is not only easily available on the market, but also cheaper and more cost-effective than other optional metals.

Alternatively, the material of the spacer mental layer is gold or silver or combination of both. Because gold or silver is a metal material with excellent electrical conductivity, and has very stable chemical property, and may basically not electrochemically react with other metals, and thus can be used as the material of the spacer mental layer.

The spacer mental layer is fixed, by electroplating, electromagnetic welding, arc spraying, friction welding, ultrasonic welding, arc welding or pressure welding, on the electrical connection skeleton 2 to be welded or on the position of the connection terminal including at least the welding area.

Electroplating method refers to a process of plating a thin layer of other metals or alloys on some metal surface using the principle of electrolysis.

The electromagnetic welding refers to that instantaneous high-speed collision occurs between two workpieces to be welded under the action of strong pulsed magnetic field, and when surface of the material is subjected to high pressure waves, the atoms of the two materials meet in the interatomic distance, thus forming a stable metallurgical bond at the interface, which is a type of solid-state cold welding that can weld together conductive metals with similar or dissimilar properties.

Arc spraying is a technology that uses electric arc burning between two continuously fed metal wires to melt metal, atomizes the molten metal with high-speed airflow, and accelerates the atomized metal particles to spray them to the workpiece to form a coating.

The friction welding refers to a method of welding by using the heat generated by the friction of the workpiece contact surface as the heat source to make the workpiece produce plastic deformation under the action of pressure.

The ultrasonic welding refers to that high-frequency vibration wave is transmitted to the surfaces of two objects to be welded, and under pressurization, the surfaces of two objects rub against each other to form a fusion between molecular layers.

The arc welding refers to that electric arc is taken as the heat source and the physical phenomenon of atmospherical discharges is utilized to convert electrical energy into thermal and mechanical energy required for welding, so as to achieve the purpose of connecting metal, and the main methods include welding electrode arc welding, submerged arc welding, gas shielded welding and so on.

The pressure welding method is a method of applying pressure to a weldment to make the binding surface be in contact closely to produce a certain plastic deformation and complete the welding.

In some embodiments, thickness of the spacer mental layer is 0.1µm to 230 µm. If the thickness of the spacer mental layer is less than 0.1 µm, during ultrasonic welding, the copper terminal has friction with the electrical connection skeleton 2, and the spacer mental layer is easy to be destroyed by the copper terminal and the aluminum wire, so as to cause contact between copper and aluminum, and thus the spacer mental layer does not play the role of separating the two metals. When the thickness of the spacer mental layer is greater than 230 µm, because most of the spacer mental layer materials are not as conductive as copper and aluminum metals, and large thickness thereof may instead lead to the increase of the voltage drop of the welded joint. In addition, the dosage of the spacing metal increases, the cost increases, but the performance is not significantly improved. Therefore, the spacer mental layer in the disclosure is arranged in the thickness range of 0.1 to 230 µm.

In order to verify the influence of the thickness of the spacer mental layer on the drawing force and voltage drop between the connection terminal and the electrical connection skeleton 2, the inventor uses 150 sets of connection terminal and electrical connection skeleton 2 having the same material and structure, plates spacer mental layers of different thicknesses on the connection terminals respectively, uses the same ultrasonic welding machine and tooling, and welds the electrical connection skeleton 2 onto the connection terminal in accordance with the same welding parameters, then tests the drawing force and voltage drop of the welded sample, and records the test results in Tables 6 and 7.

A drawing force test method: by using a drawing force testing machine, the connection terminal and the electrical connection skeleton 2 are respectively fixed on the fixture of the drawing force testing machine, and the drawing force testing machine is started to move the connection terminal and the electrical connection skeleton 2 in opposite directions, and the drawing force value when the connection terminal and the electrical connection skeleton 2 are separated is recorded. In this embodiment, the drawing force value of the connection terminal and the electrical connection frame 2 is greater than 1700 N.

A voltage drop test method: a precision voltmeter is used to apply a certain voltage to the welded sample, and respectively measure the voltage of the electrical connection skeleton 2 of the same length and the welded sample with the connection terminal after welding, and calculate a difference to take the absolute value, as the voltage drop value of the welded sample. In this embodiment, the voltage drop value of less than 4.0 mV between the connection terminal and the electrical connection skeleton 2 is a qualified value.

**Table 6: Effect of different thicknesses of the spacer mental layer on the drawing force (N)**

| Thi ckn ess | 0.08 µm | 0.1 µm | 0.5 µm | 2 µm | 20 µm | 50 µm | 100 µm | 150 µm | 200 µm | 230 µm | 240 µm |
|---|---|---|---|---|---|---|---|---|---|---|---|
| Ser ial No. : | Drawing force after welding (N) | | | | | | | | | | |
| 1 | 1522 | 1774 | 1830 | 1952 | 1911 | 191 1 | 1867 | 1813 | 180 2 | 1746 | 1675 |
| 2 | 1546 | 1758 | 1849 | 1962 | 1921 | 189 4 | 1858 | 1817 | 179 8 | 1753 | 1682 |
| 3 | 1552 | 1784 | 1838 | 1948 | 1924 | 187 6 | 1869 | 1827 | 178 1 | 1743 | 1672 |
| 4 | 1552 | 1763 | 1830 | 1949 | 1919 | 191 1 | 1859 | 1829 | 179 2 | 1741 | 1666 |
| 5 | 1537 | 1751 | 1821 | 1968 | 1915 | 188 0 | 1854 | 1830 | 178 4 | 1755 | 1681 |
| 6 | 1529 | 1762 | 1849 | 1971 | 1928 | 189 8 | 1853 | 1815 | 178 7 | 1747 | 1671 |
| 7 | 1539 | 1758 | 1835 | 1961 | 1934 | 187 9 | 1859 | 1814 | 179 0 | 1753 | 1670 |
| 8 | 1543 | 1764 | 1844 | 1971 | 1925 | 187 1 | 1865 | 1822 | 180 2 | 1747 | 1666 |
| 9 | 1537 | 1754 | 1833 | 1980 | 1923 | 190 3 | 1852 | 1820 | 180 8 | 1738 | 1683 |
| 10 | 1548 | 1758 | 1843 | 1974 | 1932 | 189 7 | 1860 | 1830 | 179 6 | 1746 | 1660 |
| Av era ge val ue | 1538. 5 | 1762. 6 | 1837. 1 | 1963. 6 | 1923. 2 | 189 2 | 1859. 6 | 1821. 7 | 179 4 | 1746. 5 | 1672. 6 |

**Table 7: Influence of different thicknesses of the spacer mental layer on voltage drop (mV):**

| Thickness | 0.08 µm | 0.1 µm | 0.5 µm | 2 µm | 20 µm | 50 µm | 100 µm | 150 µm | 200 µm | 230 µm | 240 µm |
|---|---|---|---|---|---|---|---|---|---|---|---|
| Serial No.: | Voltage drop after welding (mV) | | | | | | | | | | |
| 1 | 4.1 | 3.4 | 3.2 | 3.1 | 3.2 | 3.4 | 3.5 | 3.5 | 3.7 | 3.9 | 4.1 |
| 2 | 4.0 | 3.5 | 3.3 | 3.2 | 3.3 | 3.5 | 3.6 | 3.5 | 3.6 | 3.8 | 4.1 |
| 3 | 4.2 | 3.4 | 3.2 | 3.1 | 3.2 | 3.5 | 3.6 | 3.6 | 3.5 | 4.0 | 4.0 |
| 4 | 4.1 | 3.3 | 3.2 | 3.1 | 3.2 | 3.5 | 3.5 | 3.6 | 3.7 | 3.8 | 4.1 |
| 5 | 4.1 | 3.4 | 3.3 | 3.2 | 3.2 | 3.4 | 3.5 | 3.8 | 3.7 | 4.0 | 4.2 |
| 6 | 4.1 | 3.4 | 3.2 | 3.2 | 3.2 | 3.4 | 3.5 | 3.6 | 3.8 | 3.9 | 4.2 |
| 7 | 4.2 | 3.4 | 3.3 | 3.0 | 3.2 | 3.4 | 3.5 | 3.6 | 3.8 | 3.9 | 4.0 |
| 8 | 4.1 | 3.4 | 3.2 | 3.1 | 3.3 | 3.4 | 3.5 | 3.8 | 3.7 | 3.9 | 4.1 |
| 9 | 4.2 | 3.4 | 3.2 | 3.2 | 3.3 | 3.3 | 3.5 | 3.6 | 3.8 | 4.0 | 4.2 |
| 10 | 4.2 | 3.4 | 3.2 | 3.1 | 3.3 | 3.5 | 3.5 | 3.6 | 3.8 | 3.9 | 4.1 |
| Average value | 4.13 | 3.4 | 3.23 | 3.13 | 3.24 | 3.43 | 3.52 | 3.62 | 3.71 | 3.91 | 4.11 |

As can be seen from Table 6 and Table 7 above, when the thickness of the spacer mental layer is about 2 µm, the mechanical and electrical properties of the welded joint of the connecting terminal with the electrical connection skeleton 2 are the best; and when the thickness of the spacer mental layer is more than 230 µm and less than 0.1 µm, the mechanical and electrical properties of the welded joint of the connecting terminal with the electrical connection skeleton 2 suddenly decline, which does not meet the requirement of the qualified value. Therefore, the inventor sets that the spacer mental layer is arranged in the thickness range of 0.1µm to 230 µm.

In some embodiments, an insulation layer 22 sleeves on the periphery of the electrical connection skeleton 2. The insulation layer 22 can prevent the electrical connection skeleton 2 from coming in contact with the vehicle housing to cause short circuit.

Further, the insulation layer 22 is further sleeved with a shielding layer 23 and an outer insulation layer 24 in sequence. The shielding layer 23 can reduce the interference of the electromagnetic radiation generated by the electrical connection skeleton 2 to other electric devices in the vehicle. The shielding layer 23 is made of conductors and needs to be grounded, so the insulation layer 22 is arranged between the shielding layer 23 and the electrical connection skeleton 2 to prevent contact between the two. The outer insulation layer 24 can prevent the shielding layer 23 from coming in contact with the vehicle housing to cause short circuit.

In some embodiments, the number of the electrical connection skeleton 2 is greater than or equal to two, and the at least two electrical connection skeletons are arranged side by side.

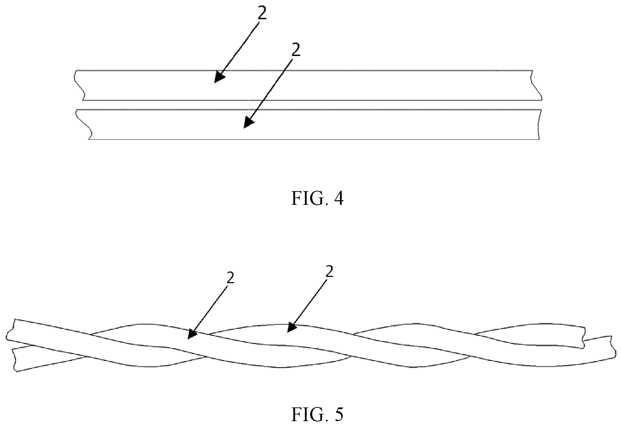

The two electrical connection skeletons 2 are arranged side by side. As shown in FIG. 4, the electrical connection skeletons 2 can be arranged side by side without interfering with each other, which is convenient for layout and convenient for wiring in the vehicle.

In some embodiments, the number of the electrical connection skeleton 2 is greater than or equal to two, and the at least two electrical connection skeletons are arranged in a twisted manner. As shown in FIG. 5, because the guide core 21 conducts a large current, a large electromagnetic interference is generated around the electrical connection skeleton 2. In order to avoid the impact of electromagnetic interference on the electric devices of the vehicle, a shielding layer 23 is arranged in the electrical connection skeleton 2, which can block and reduce the electromagnetic interference generated by the guide core 21. However, the cost of the shielding layer 23 arranged in the electrical connection skeleton 2 is high, because it is necessary to increase both the processing equipment of the shielding layer 23 and the cost of the material of the shielding layer 23.

At some positions where the requirement of the shielding effect is not high, the unshielded electrical connection skeleton 2 can be twisted to reduce the electromagnetic interference generated by the guide core 21. The electromagnetic interference generated by the mutually twisted guide cores 21 may be offset by each other, so as to no longer affect the electrical devices of the vehicle, reduce the shielding layer 23 in the electrical connection skeleton 2, reduce processing and material costs, and reduce the cost of the connector.

Further, the two electrical connection skeletons 2 are twisted to each other at a twisted pitch less than or equal to 15 times the outer diameter of the electrical connection skeleton 2. If the two electrical connection skeletons 2 are twisted to each other at a too long twisted pitch, the screen effect generated by the stranding is not ideal. In order to find a suitable twisted pitch at which the two electrical connection skeletons 2 are twisted to each other, the inventor has carried out a test. The test method is to select a combination of two electrical connection skeletons 2 at different twisted pitchs and test their magnetic field offset ratios respectively, and the test data is as shown in Table 8. The magnetic field offset percentage greater than 30% is a qualified value.

**Table 8: The influence of multiple of the twisted pitch at which the two electrical connection skeletons are twisted to each other to the outer diameter of the electrical connection skeleton on the magnetic field offset percentage**

| The multiple of the twisted pitch to the outside diameter | Magnetic field cancellation percentage | | | | |
|---|---|---|---|---|---|
| | Sample 1 | Sample 2 | Sample 3 | Sample 4 | Sample 5 |
| 17 | 0.0% | 0.0% | 0.0% | 0.0% | 0.0% |
| 16 | 12.1% | 12.2% | 11.8% | 12.0% | 11.9% |
| 15 | 30.1% | 30.8% | 31.1% | 31.3% | 32.1% |
| 14 | 33.1% | 33.8% | 34.1% | 34.7% | 35.1% |
| 12 | 40.1% | 42.8% | 43.1% | 43.9% | 44.6% |
| 10 | 45.8% | 43.6% | 46.9% | 48.3% | 43.6% |
| 8 | 49.9% | 50.3% | 50.8% | 51.2% | 49.8% |
| 5 | 60.2% | 60.7% | 60.1% | 60.6% | 61.1% |

As can be seen from Table 8, the two electrical connection skeletons 2 are twisted to each other at a twisted pitch less than or equal to 15 times the outer diameter of the electrical connection skeleton 2. The magnetic field offset percentage is qualified, and it has a certain effect on preventing electromagnetic interference, so the inventor prefers this multiple as 15 times.

In some embodiments, at least part of the surface of the connection terminal is provided with a coating.

The coating is to improve corrosion resistance of the connection terminal, improve the conductive performance, increase the number of times of plug-in connection, and better prolong the service life of the connection terminal and the electrical connection skeleton 2.

The coating can be made by electroplating, chemical plating, magnetron sputtering or vacuum plating or the like. Electroplating method refers to a process of plating a thin layer of other metals or alloys on a metal surface using the principle of electrolysis. Chemical plating refers to a process of deposition of metals generated by controllable oxidation-reduction reaction under the catalysis of metals. Magnetron sputtering refers to that, using the interaction of magnetic and electric fields, the electrons travel in a spiral pattern near the surface of the target, thus increasing the probability that the electrons will hit the argon and produce ions, and the generated ions will hit the target surface under the action of electric field and sputter out the target material. Vacuum plating refers to that, under vacuum conditions, various metal and non-metal films are deposited on the surface of the parts by means of distillation or sputtering or the like.

The thickness of the coating on the connection terminal and the electrical connection frame2 can be the same. Since the coatings have the same thickness, they can be electroplated in one time during the processing, and there is no need to carry out complex electroplating processing in order to obtain different thicknesses of the coatings in different regions, so as to save processing costs and reduce electroplating pollution.

The materials of the coating on the connection terminal and the electrical connection frame2 can be different. Different coatings can be selected according to the need. For example, a combination with higher electric conductivity may be selected according to the need, or a combination with better corrosion resistance may be selected, or a combination that is most suitable for the actual working environment may be selected by taking various factors into consideration.

The material of the coating is one or more of gold, silver, nickel, tin, zinc, tin-lead alloy, silver-antimony alloy, palladium, palladium-nickel alloy, graphite-silver, graphene-silver and silver-gold-zirconium alloy. Copper is a reactive metal, thus an oxidation reaction may occur between copper and oxygen and water during use, therefore, one or more inactive metals are needed as a coating to prolong the service life of the terminal. In order to demonstrate the influence of different coating materials on the overall performance of the terminal, the inventor adopts the same specification and material, uses a sample of the terminal with different coating materials, and performs a series of tests of number of times of insertion and removal and corrosion resistance time by using the matching connector assemblies of the same specification. In order to prove the advantages and disadvantages of the selected materials and other commonly used electroplating materials, the inventor also selects tin, nickel and zinc as the coating materials for the experiment. The experimental results are shown in Table 9 below.

The number of times of insertion and removal in the following Table 9 means that the connection terminals are fixed on the experiment table respectively, and the connection terminal simulates insertion and removal by a mechanical device, and after every 100 times of insertion and removal, it is necessary to stop and observe the damage of the coating of the terminal surface. When the coating of the terminal surface is scratched and the material of the terminal itself is exposed, the experiment is stopped and the number of times of insertion and removal at that time is recorded. In this embodiment, if the number of times of insertion and removal is less than 8000, it shows an unqualified product.

The test of corrosion resistance time in the Table 9 below refers to, putting a connection terminal into a salt fog spraying test chamber to spray salt fog to each position of the terminal and then taking the terminal out every 20 hours to clean the terminal and observe surface corrosion of the terminal, at that time a cycle ends, and when the corrosion area of the terminal surface is greater than 10% of the total area, stopping the test and recording the number of cycles at that time. In this embodiment, the number of cycles less than 80 is considered as being unqualified.

As can be seen from the Table 9 below, when the material of the coating is commonly used metal tin, nickel and zinc, the experimental results are far inferior to other selected metals. Although the coating nickel is qualified in the experiment of the number of times of insertion and removal, it is not outstanding, and is not qualified in the salt spray experiment. When other metals are used, the experimental results are more than the standard value, and the performance is stable. Therefore, the inventor selects the material of the coating to be one or more of gold, silver, silver-antimony alloy, graphite-silver, graphene-silver, palladium-nickel alloy, tin-lead alloy, or silver-gold-zirconium alloy.

**Table 9 Influence of different coating materials on the number of times of insertion and removal and corrosion resistance of the connection terminal**

| Different coating materials | | | | | | | | | | | |
|---|---|---|---|---|---|---|---|---|---|---|---|
| Gold | Silve r | Silve r-antim ony Alloy | Grap hitesilver | Grap henesilver | Silve r-goldzirco nium Alloy | Tin | Nick el | Palla dium | Palla dium nicke l Alloy | Tin-lead Alloy | Zinc |
| Number of Times of Insertion and Removal (times) | | | | | | | | | | | |
| 1240 0 | 1180 0 | 1220 0 | 1200 0 | 1270 0 | 1210 0 | 8200 | 8400 | 1110 0 | 1200 0 | 1000 0 | 8500 |

| | | | Number of periods of corrosion resistance test (times) | | | | | | | | |
|---|---|---|---|---|---|---|---|---|---|---|---|
| 131 | 128 | 120 | 130 | 127 | 131 | 82 | 89 | 110 | 120 | 111 | 88 |

In some embodiments, the number of the connector 1 is two, in which one connector 1 is a charging socket and the other connector 1 is connected to the vehicle-mounted battery. One end of the electrical connection skeleton 2 is connected to the terminal in the charging socket, and the other end thereof is connected to the vehicle-mounted battery through the connector 1 to form a complete charging system.

The present disclosure further provides a vehicle including a connector assembly as described above.

Although some specific embodiments of the disclosure have been described in detail by examples, it should be understood by those skilled in the art that the above examples are intended only for illustration and not to limit the scope of the disclosure. Those skilled in the art should understand that the above embodiments may be modified without departing from the spirit or scope of the disclosure. The scope of the disclosure is limited by the appended claims.

## Claims

1. A connector assembly, comprising at least one electrical connection skeleton and a connector arranged at both ends of the electrical connection skeleton, **characterized in that**, the connector comprises a connection terminal, material of the connection terminal is copper or copper alloy, material of the electrical connection skeleton contains pure aluminum or aluminum alloy with an aluminum content of more than 90%, and the electrical connection skeleton is electrically connected to the connection terminal through a spacer mental layer.

2. The connector assembly according to claim 1, **characterized in that**, the material of the spacer mental layer is gold or silver or a metal with an electric potential between that of copper and aluminum.

3. The connector assembly according to claim 1, **characterized in that**, at least part of the electrical connection skeleton is a flexible body.

4. The connector assembly according to claim 1, **characterized in that**, the electrical connection skeleton comprises at least one bending portion.

5. The connector assembly according to claim 1, **characterized in that**, the electrical connection skeleton has a cross section in the shape of one or several of circular, oval, rectangular, polygonal, A-shaped, B-shaped, D-shaped, M-shaped, N-shaped, O-shaped, S-shaped, E-shaped, F-shaped, H-shaped, K-shaped, L-shaped, P-shaped, T-shaped, U-shaped, V-shaped, W-shaped, X-shaped, Y-shaped, Z-shaped, semi-arc, arc, and waved shape.

6. The connector assembly according to claim 1, **characterized in that**, the cross section of the electrical connection skeleton is polygonal, and corners of the polygon are rounded or chamfered.

7. The connector assembly according to claim 1, **characterized in that**, the electrical connection skeleton is a rigid body and the tensile strength of the electrical connection skeleton is greater than 75 MPa.

8. The connector assembly according to claim 1, **characterized in that**, a cross sectional area of the electrical connection skeleton is 3.5 mm² to 240 mm².

9. The connector assembly according to claim 1, **characterized in that**, the spacer mental layer contains at least 37 wt% of copper-aluminum solid solution.

10. The connector assembly according to claim 9, **characterized in that**, the copper-aluminum solid solution contains copper-aluminum compound, the content of copper-aluminum compound is less than 15 wt%.

11. The connector assembly according to claim 1, **characterized in that**, the material of the spacer mental layer contains one or several of nickel, cadmium, zirconium, chromium, cobalt, manganese, aluminum, tin, titanium, zinc, copper, silver, gold, phosphorus, tellurium, beryllium or lead.

12. The connector assembly according to claim 1, **characterized in that**, thickness of the spacer mental layer is 0.1µm to 230 µm.

13. The connector assembly according to claim 1, **characterized in that**, an electrical connection skeleton is externally wrapped in an insulation layer.

14. The connector assembly according to claim 13, **characterized in that**, the insulation layer is further sleeved with a shielding layer and an outer insulation layer in sequence.

15. The connector assembly according to claim 1, **characterized in that**, the number of the electrical connection skeleton is greater than or equal to two, and the at least two electrical connection skeletons are arranged side by side.

16. The connector assembly according to claim 1, **characterized in that**, the number of the electrical connection skeleton is greater than or equal to two, and the at least two electrical connection skeletons are arranged in a twisted manner.

17. The connector assembly according to claim 16, **characterized in that**, the electrical connection skeletons are twisted to each other at a twisted pitch less than or equal to 15 times the outer diameter of the electrical connection skeleton.

18. The connector assembly according to claim 1, **characterized in that**, at least part of the surface of the connection terminal is provided with a coating.

19. The connector assembly according to claim 1, **characterized in that**, the number of the connector is two, in which one connector is a charging socket and the other connector is connected to the vehicle-mounted battery.

20. A vehicle **characterized in** comprising a connector assembly according to any of claims 1 to 19.
